# EUROPEAN PATENT SPECIFICATION

(11) **EP 2 519 380 B1**
(45) Date of publication and mention of the grant of the patent: **25.06.2014**
(21) Application number: 10769085.1
(22) Date of filing: 21.09.2010
(51) Int. Cl.: B24B 1/04, B24B 39/00, B24B 39/06, B24B 9/04

(54) **UNIT FOR SURFACE TREATMENT OF TOP LAYERS, ESPECIALLY OF METAL**
EINHEIT ZUR OBERFLÄCHENBEARBEITUNG OBERER SCHICHTEN, INSBESONDERE VON METALL
UNITÉ POUR LE TRAITEMENT DE SURFACE DE COUCHES SUPÉRIEURES, EN PARTICULIER DE MÉTAL

(30) Priority: 29.12.2009 PL 39006609
(43) Date of publication of application: 07.11.2012
(73) Proprietor: Instytut Obróbki Plastycznej, 61-139 Poznan (PL)
(72) Inventor: ZIÓLKIEWICZ, Stanislaw, PL-60-357 Poznan (PL); KIRYLUK, Bohdan, PL-60-111 Poznan (PL)
(74) Representative: Luczak, Jerzy
(86) International application number: PCT/PL2010/000095
(87) International publication number: WO 2011/081540

(56) References cited:
- WO-A1-2007/016919
- DE-A1-102004 058 146
- US-A1- 2002 014 100

## Description

The subject of the invention is a unit for surface treatment of top layers, especially of metal, which is used for the treatment of top layers of working surfaces of machine parts, and especially for placement of coatings of micro- and nanometric solid greases in the unevenness of the surfaces of extrusion punches and on sliding guides of machine tools.

It is known from German patent application No. DE 102004058146 A1 method and device for hardening the surfaces of components.
A method of surface hardening of components, in particular gas turbine components, wherein the solidification of a surface of a component of a relative movement or Feed movement between the component and at least one in the ultrasonic frequency range excited, tool is established, lies in the fact that the or each tool in the surface hardening such to be solidified surface of the component is aligned, that one in the effective direction of the respective tool extending tool axis obliquely to the surface to be solidified runs of the component.

It is known from U.S. Patent Application Publication No. U.S. 2002/014100 A1 device for ultrasonic peening of metals.
A device for the ultrasonic peening of metals comprising: an ultrasonic generator; an uncooled piezoelectric transducer operatively connected to said ultrasonic generator; a working head releasably connected to said piezoelectric transducer, said working head including a holder having one or more freely moving pins extending therefrom for working a work-piece, said peens being sized and shaped to be vibrated by said transducer; wherein, said ultrasonic generator has sufficient power to cause said pins to vibrate at amplitudes of about between 25 to 40 [mu]m under axial loading of about 25 to 50 N for uninterrupted working of a work piece.

It is known from the publication WO 2007/016919 of the international application PCT/DE2006/001393 the method and device for the technique of cold microforging any freely formed 3-d surfaces.
Electromechanical device and method for processing, smoothing and cold-hardening the surface of tools, machine parts by hammering an impact head onto the surface of said parts by means of absorption on a processing machine tool or a robot, lies in the fact that the impact head without excitation current by a magnetic flux is held in a rest position, and the impact frequency and impact amplitude by the flow of an alternating or pulsed excitation current, with or without a DC component, is determined by the turns of at least one coil, placed in the middle of the same magnetic flux or a different magnetic flux, produced in such a variable, in that the distance zero crossing of the the impact frequency from the workpiece surface by the excitation current is variable.

The surface treatment of surfaces using the method of plastic microdeformation (burnishing) is divided into static burnishing and dynamic burnishing, depending on the method of applying pressure. The method described in the claim fits in the category of dynamic methods, in which the method of exerting tool pressure on the processed item is variable as a result of kinetic energy.

The methods closest to the described method include ball burnishing, shot blasting and hammering. Characteristic for this group of burnishing methods is the discontinuous, short-term contact of the tool with the surface of a treated item. The resulting traces of the tool operation are separate areas. The dynamic methods are based on probabilistic distribution of imprints of the operational tool in the form of balls, shot etc., on the treated surface, which does not guarantee a uniform micro-deformation of the surface and the distribution of deformations. Therefore, these methods require such an amount of traces, so that the overall area of the projection over the treated surface was at least equal to the area of the surface. In order to achieve a specified depth of hardening multiple overlapping traces are required; as measured by the number of strikes over a surface of area.

The above methods of burnishing are characterised by unrestrained kinematics, which adversely influences the geometry of treated objects. This results in:
- lack of ability to directly reduce geometric errors, with the exception of changes to the coarseness,
- condition of the top layer is significantly more varied in comparison to static methods,
- smoothness of the surface is usually lower than before the burnishing process
- danger of damage to the surface by crumbling of working elements in the ball burnishing and shot blasting method.

Also, the method of hammering is characterised by limited kinematics, which limits its use to parts, the surface of which is composed of regular shapes,

The invention provides a unit for surface treatment of top layers, especially of metal according to claim 1.

The use of the solution presented in the invention enables the control over the dynamics of the strikes of the piezoelectric actuator, which enables the control of the amount of energy of the hammer which produces microdeformations of the top layer, guaranteeing the hardening which does not exceed the limiting values of plastic deformation of crystallites. The essential feature of this solution is a uniform distribution of treatment traces on the treated surface which results from the synchronised movement of the treated item (shift) and the working tool powered by a PE actuator controlled by the frequency generator (strike frequency, amount of provided energy). This synchronisation enables a permanent distance between the imprints and the depth of the imprint. The advantage of the solution when compared to previous solutions is that it guarantees a uniform distribution of imprints over a unit of surface of the product, which translates into a uniform placement of foreign objects over the treated surface. Additionally, uniform microdeformations of the surface cause compressive stresses in the top layer, and thus, it improves mechanical properties (including fatigue strength, hardness), tribiological properties (by increasing the abrasion resistance) and geometric properties (improving the smoothness and precision of construction).

Additionally, during the hammering process it is possible to control the value of local deformation over the treated surface, and thus, to control the mechanical properties which vary over different fragments of the treated surface.

Through the use of the presented solution it is possible to control the plastic deformation of the top layer of working surfaces of machine parts which improve their mechanical, structural and tribological properties, and increase their smoothness and precision, which as a result extends the operational period of these parts and advantageously influences the natural environment. This method, as distinguished from the typical hammering methods enables the improvement of the surface smoothness.

The proposed solution is relatively easy to be used in numeric control systems.

The examples of the use of the solution in accordance with the invention:
- burnishing of the working surfaces of machine parts,.
- improving the smoothness of the working surfaces of machine parts
- controlling the properties of burnished working surfaces of machine parts, with varying of the deformation values of the top layer

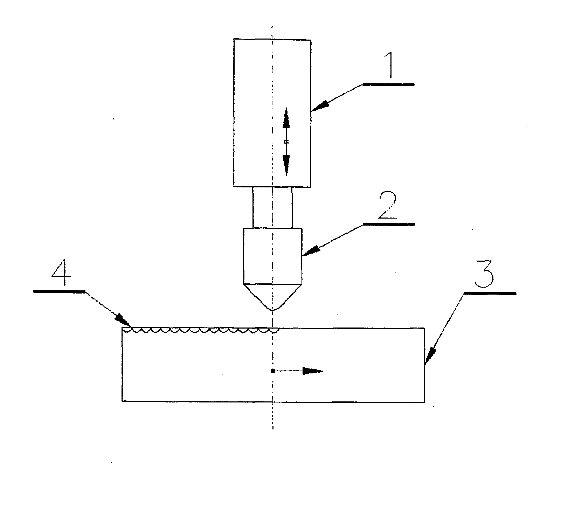

The invention, in an example, but not limiting, is presented in the figure.

Piezoelectric actuator 1 is mounted at a set distance to the treated surface. To the end of the piezoelectric actuator 1 a hammer 2 is attached - a tool with a ball-shaped end acting on the treated surface. The drive of the piezoelectric actuator is provided by a high frequency voltage generator which ensures its reciprocal movement with a set frequency within the range of 10 to 1000 Hz and the input function curve characteristic. These parameters allow the control of the energy of the hammer strike over the treated surface. The treated object 3 moves in a direction perpendicular to the direction of movement of the hammer 2. As a result of the strike of the hammer 2 the deformation of the top layer of the treated material 4, with the scale between individual strikes of the hammer within the limits of 0,05 to 5.0 mm.

Initially compressed piezoelectric material, subjected to electric current, lengthens in proportion to the amount of the applied voltage.

The speed of lengthening depends directly on the speed of voltage increase. The acceleration in an amount of thousands of gees can thus be obtained. This is a feature which was used in dynamic applications, such as used in the invention.

The frequency and strength of hits of the ram attached to the piezoelectric element depends on the current voltage, intensity and frequency and on the inertia of the mechanical system of the ram. The control of these parameters enables the adaptation of the character of the strikes to the requirements of the process.

## Claims

1. A unit for surface treatment of top layers, especially of metal, in the form of an element driving a ram, which is a hammer with a ball- shaped working area, with a reciprocating movement and an actuator for powering the ram, which being a piezoelectric actuator, mounted at a set distance to the treated surface and powered by a high frequency voltage generator, **characterized in that** the hammer (2) with a ball-shaped end acting on the treated surface is in use placed perpendicular to the treated surface and is connected with a piezoelectric actuator (1), which is driven by a high frequency voltage generator with a frequency changeable within the range of 10 Hz to 1000 Hz and for which the relative movement of the hammer (2) in relation to the treated material (3) along the acting line is within the range of 0.05 to 5.0 mm.

## Patentansprüche

1. Das Aggregat zur Oberflächenbehandlung von Deckschichten, bevorzugt von Metalldeckschichten, bestehend aus einem Schlagelement in Form eines kleinen Hammers mit einer kugelförmiger Arbeitsfläche, das eine hin- und hergehende Bewegung macht, und einem Servomotor zum Antrieb von dem Schlagelement, der ein piezoelektrischer, in einem festgelegten Abstand von der zu behandelnden Oberfläche befestigter und mittels eines Frequenz-Spannungsgenerators angetriebener Servomotor ist, **dadurch gekennzeichnet, dass** der kleine Hammer (2) mit einem auf die Oberfläche einwirkenden kugelförmigen Ende senkrecht zu der zu behandelnden Oberfläche angebracht und mit dem piezoelektrischen, mittels Frequenz-Spannungsgenerators mit einer variablen Frequenz von 10 Hz bis 1000 Hz angetriebenen Servomotor (1) verbunden ist, wobei der Vorschub des kleinen Hammers (2) gegenüber dem zu behandelnden Element (3), längs seiner Einwirkungslinie, im Bereich von 0,05 bis 5,0 mm liegt.

## Revendications

1. Le dispositif de traitement de surface de couches d'usures, notamment métalliques, sous forme d'un élément entraînant un batteur constitué d'un petit marteau avec la surface de travail sphérique, exécutant un mouvement d'avance et de retour, et d'un servomoteur pour l'entraînement du batteur, qui est un servomoteur piézoélectrique, installé à une distance définie par rapport à la surface traitée et alimentée par un générateur de fréquence - tension, **caractérisé en ce que** le petit marteau (2) à l'extrémité sphérique, ayant l'impact sur la surface traitée, est situé perpendiculairement à la surface traitée et relié à un servomoteur piézoélectrique (1), alimenté par un générateur de fréquence - tension à fréquence variable dans la plage de 10 Hz à 1000 Hz, et le déplacement du marteau (2) par rapport à la pièce usinée (3), le long de la ligne de réaction se situe dans la plage de 0,05 à 5,0 mm.
